# EUROPEAN PATENT APPLICATION

(11) **EP 1 602 431 A1**
(43) Date of publication of application: **07.12.2005**
(21) Application number: 05253257.9
(22) Date of filing: 26.05.2005
(51) Int. Cl.: B23H 1/10, B23H 7/10, B23H 7/36

(54) **Electric discharge machine and machining fluid cooling device**

(30) Priority: 28.05.2004 JP 2004159959
(71) Applicant: FANUC LTD, Minamitsuru-gun, Yamanashi 401-0597 (JP)
(72) Inventor: Arakawa, Yasuo, Minamitsuru-gun Yamanashi 401-0511 (JP); Yamaguchi, Meguru, Fanuc, Minamitsuru-gun Yamanashi 401-0511 (JP)
(74) Representative: Billington, Lawrence Emlyn

(57) **Abstract**

An electric discharge machine controls temperature fluctuations of machining fluid discharged by a discharge pump (6) so as to improve machining accuracy, and a machining fluid cooling device (2) keeps the temperature of the discharged machining fluid constant regardless of the operating state of the discharge pump. The electric discharge machine pumps machining fluid in a temperature controlled clean fluid tank (12) with a discharge pump (6) and discharges the machining fluid to a machining area (5) through piping, and has a machining fluid cooling device (2) for cooling machining fluid discharged from the discharge pump (6). The machining fluid cooling device (2) passes a portion of the piping through the clean fluid tank (12) and exchanges heat between the machining fluid inside the piping and the clean fluid in the clean fluid tank (14), thus dispersing the heat added from the discharge pump to the clean fluid side and lowering the temperature of the machining fluid inside the piping.

## Description

### BACKGROUND OF THE INVENTION

### 1. Field of the Invention

The present invention relates to an electric discharge machine in which machining fluid is supplied to an electric discharge machining area, and more particularly to a machining fluid cooling device for cooling machining fluid and an electric discharge machine equipped with the machining fluid cooling device.

### 2. Description of Related Art

In a wire cut electric discharge machine, a workpiece is machined by generating a spark discharge between a workpiece and a wire electrode. Machining fluid is supplied to the workpiece and the wire electrode by a pump, thereby removing sludge as well as cooling the electric discharge machining area so as to prevent a rise in temperature.

The faster the machining, the greater the pressure with which the machining fluid is supplied to the machining area, and consequently the quicker the post-machining sludge can be removed from the machining area, and furthermore, the cooling effect on the wire (the temperature of which rises due to electric discharge machining) can be increased as well. Typically, a machining fluid supply pressure of approximately 1.5 MPa maximum is used.

In addition, with a wire cut electric discharge machine, in order to increase the accuracy of machining, it is preferable to keep not only the machining area but also a work table that fixes the workpiece in place, a machining tank for machining in fluid, and further the machine as a whole, at the same constant temperature.

The electric discharge machine discharges heat upon discharge during electric discharge machining, and moreover, generates heat by the action of the pump. This heat generated by electric discharge and by the pump is absorbed by the machining fluid, causing the temperature of the machining fluid to rise. Conventionally, in order to cool this heated machining fluid, the machining fluid is temporarily collected in a tank of the machining fluid cooling device and from there sent to a cooler that is a part of the machining fluid cooling device, and, after being cooled to a constant temperature, returned to the machining fluid cooling device tank (see, for example JP 2562197Y).

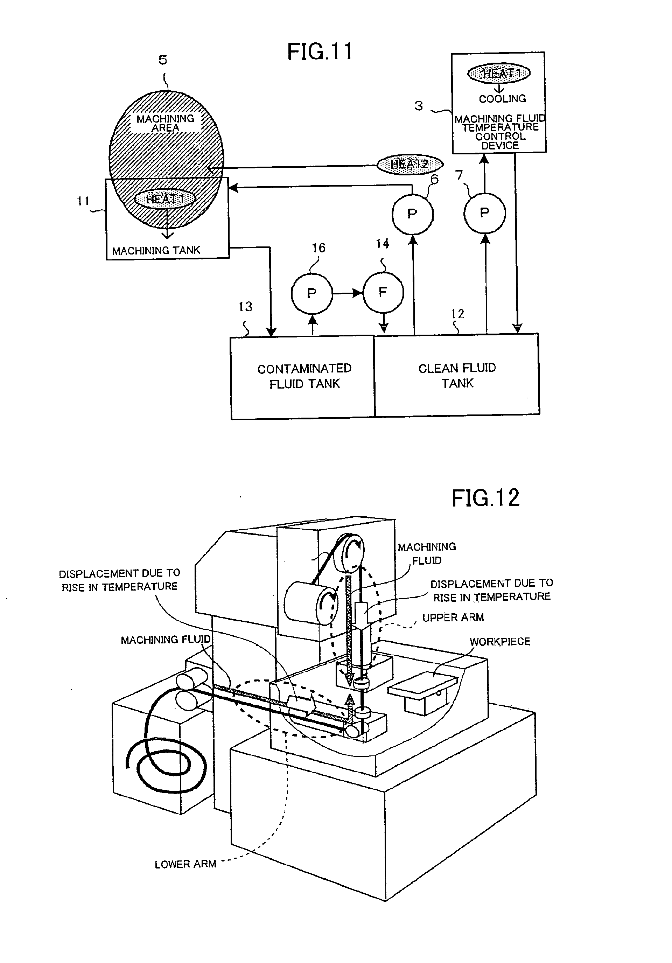

FIG. 11 is a diagram illustrating schematically the structure of a conventional machining fluid cooling device used in an electric discharge machine. In FIG. 11, the electric discharge machine electrically discharges and machines the workpiece by generating an electric discharge between the electric discharge machine wire and the workpiece. In order to remove the sludge generated during electric discharge machining and to restrain the rise in temperature due to the heat generated by electric discharge machining, machining fluid is supplied to a machining area 5. The machining fluid is discharged to the machining area 5 by a discharge pump 6 from a clean fluid tank 12, passed through a machining tank 11 and finally collected at a contaminated fluid tank 13. The collected machining fluid is then sent from the contaminated fluid tank 13 to a filter 14 by a filter pump 16 and, after the sludge is filtered, returned to the clean fluid tank 12, after which it is sent to a machining fluid temperature control device 3 and the temperature raised by electric discharge machining is lowered.

In an electric discharge machine, in order to perform even faster machining, it is necessary to discharge the machining fluid at even higher pressure (for example, 2.0 MPa or greater). In order to increase the supply pressure of the machining fluid, it is necessary to use a higher output discharge pump. However, with a high-output discharge pump, the amount of heat discharged also increases because the amount of energy consumed increases. As a result, the machining fluid passed through and discharged by the discharge pump also absorbs more heat, and the rise in temperature of the machining fluid discharged from the discharge pump increases as well.

The machining fluid discharged from the machining fluid discharge pump is supplied directly to the machining area, and thus, even though the machining fluid is temperature controlled when pumped from the machining fluid cooling device, the temperature of the machining fluid rises due to passage through the machining fluid discharge pump and is supplied to the machining area in that heated state. Accordingly, in the machining area, the temperature is greater than the temperature of the surrounding machining fluid and a temperature gradient arises, leading to deterioration in accuracy.

Furthermore, as shown in FIG. 12, mechanisms along a route over which machining fluid is supplied from the machining fluid discharge pump are also heated. In particular, because the structure is such that the machining fluid passes through such mechanisms as upper and lower wire guides and the upper arms and lower arms that support them that in turn hold the wire as well as hold a position relative to the workpiece and maintain accuracy, these mechanisms are greatly affected by the rise in temperature of the machining fluid. If these mechanisms are displaced, then the relative positions of the wire electrode and the workpiece change, leading to deterioration in accuracy.

In a case in which machining always takes place at the same pump pressure, then it is possible to maintain the temperature at a steady state as well. However, machining of a workpiece usually involves a whole range of machining steps, from rough machining requiring high pressure to delicate finishing requiring very low pressure, and thus, for example, a temperature differential is generated at the upper and lower guides and arms between the temperature of rough machining and the temperature of fine finishing, and this temperature differential causes positional error.

That is, in a case of performing rough machining at high speed, the machining fluid discharge pump runs at high speed, and therefore the machining fluid passing through the machining fluid discharge pump is heated by the pump drive so that the temperature of the machining fluid rises, causing the temperature of the mechanism components through which it passes to rise and creating heat fluctuations.

In other words, although the wire guides that support the wire electrode that carries out the machining are attached to the tips of the mechanism components, the positions of these tips relative to the workpiece during machining slips due to heat fluctuations caused by the rise in temperature described above.

By contrast, because the machining fluid discharge pump switches to low-speed operation during finishing, the rise in fluid temperature decreases, the temperature of the mechanism components, which had increased during rough machining, decreases, and the wire guides that support the wire electrode return to their original positions.

Therefore, finishing machining is performed at locations off the track that the wire electrode machines during rough machining, and a gap arises between the rough machining track and the finishing machining track, leading to machining accuracy malfunction.

As described above, although conventionally the temperature of the machining fluid is controlled, this temperature control is exercised at the clean fluid tank on the intake side of the machining fluid discharge pump, with no temperature control exercised on the discharged machining fluid on the discharge side of the machining fluid discharge pump, and hence no consideration is given to the temperature fluctuations of the machining fluid due to the machining fluid discharge pump itself.

### SUMMARY OF THE INVENTION

The present invention provides an electric discharge machine in which temperature fluctuations of machining fluid discharged by a discharge pump is controlled to improve machining accuracy. The present invention also provides a machining fluid cooling device capable of maintaining temperature of machining fluid sent to a machining area at a constant value regardless of an operating state of a discharge pump.

According to the present invention, a cooling device for cooling the machining fluid is provided on a discharge side of the machining fluid discharge pump so as to restrain a rise in temperature of the machining fluid discharged from the discharge pump and maintain the machining area at a constant temperature, thereby improving machining accuracy.

The electric discharge machine of the present invention comprises: a clean fluid tank containing machining fluid with temperature thereof controlled; a discharge pump for discharging machining fluid in the clean fluid tank to a machining area through piping; and a machining fluid cooling device provided between said discharge pump and the machining area, for cooling the machining fluid discharged from the discharge pump.

The machining fluid cooling device may comprise a part of the piping passing through said clean fluid tank to exchange heat between the machining fluid inside the part of the piping and the machining fluid contained in the clean fluid tank. The part of the piping may be provided with fins.

A machining fluid temperature control device may be provided for controlling the temperature of the machining fluid in the clean fluid tank, and the machining fluid temperature control device may function as the machining fluid cooling device for cooling the machining fluid discharged from the discharge pump.

The machining fluid cooling device of the present invention is provided for an electric discharge machine in which machining fluid contained in a clean fluid tank with temperature thereof controlled is discharged by a discharge pump to be sent to a machining area. The machining fluid cooling device comprises: piping for conducting the machining fluid discharged from the discharge pump to the machining area; and a heat exchanger connected with the piping and arranged in the machining fluid in the clean fluid tank, for cooling the machining fluid discharged from the discharge pump by heat exchange with the machining fluid in the clean fluid tank.

The heat exchanger may comprise a part of the piping passing through the clean fluid tank to exchange heat between the machining fluid inside the piping and the machining fluid in the clean fluid tank.
The portion of the piping passing through the clean fluid tank may be provided with fins.

The machining fluid cooling device described above can be given a simple heat-exchange pipe structure that uses no power whatsoever. This heat-exchange pipe can be given the form of multiple fins attached to piping from the discharge pump and disposed within the temperature-controlled machining fluid clean fluid tank. The machining fluid discharged from the discharge pump flows into the heat-exchange pipe, and by passing through this heat-exchange pipe warm machining fluid from the discharge pump is cooled to a temperature virtually identical to the temperature of the fluid inside the temperature-controlled clean fluid tank. The cooled machining fluid is then supplied to the upper and lower guides of the machining part, removing sludge as well as maintaining the machining area at a predetermined temperature.

In addition, the electric discharge machine of the present invention is provided with a machining fluid temperature control device that controls the temperature of the machining fluid in the clean fluid tank. Moreover, the function of the above-described machining fluid cooling device can be combined with this machining fluid temperature control device. In such a configuration, the machining fluid temperature control device can not only control the temperature of the clean fluid in the clean fluid tank but can also cool the machining fluid discharged from the discharge pump.

According to the electric discharge machine of the present invention, by adopting the structure described above, even with high-speed, precision machining, in which the operating state of the discharge pump fluctuates between rough machining and finishing machining and hence the amount of heat added to the machining fluid changes, the machining fluid supplied to the machining area can always be maintained at the same temperature. As a result, the machining track during rough machining and the machining track during finishing machining match, providing the ability to perform stable precision machining. Moreover, the present invention controls temperature fluctuations of the machining fluid discharged by the discharge pump and can thus improve machining accuracy. Furthermore, the machining fluid cooling device can maintain the machining fluid to be discharged at a constant temperature regardless of the operating state of the discharge pump.

### BRIEF DESCRIPTION OF THE DRAWINGS

FIG. 1 is a diagram illustrating the mechanical structure of the electric discharge machine;
FIG. 2 is a diagram illustrating a route system of a wire electrode of the electric discharge machine;
FIG. 3 is a diagram illustrating the flow of an electric discharge machining current of the electric discharge machine;
FIG. 4 is a diagram illustrating the flow of machining fluid of the electric discharge machine;
FIG. 5 is a diagram illustrating schematically the general structure of the electric discharge machine of the present invention;
FIG. 6 is a diagram illustrating one example of the structure of a machining fluid cooling device;
FIG. 7 is a diagram illustrating one example of the structure of a heat exchanger;
FIGS. 8a and 8b are diagrams illustrating one example of the structure of a heat exchanger;
FIG. 9 is a diagram illustrating another example of the structure of a heat exchanger;
FIG. 10 is a diagram illustrating another example of the structure of a machining fluid cooling device;
FIG. 11 is a diagram illustrating schematically the structure of a conventional machining fluid cooling device used in an electric discharge machine; and
FIG. 12 is a diagram illustrating displacement of mechanical parts due to a rise in temperature of the machining fluid.

### DETAILED DESCRIPTION

A detailed description is now given of preferred embodiments of the present invention, with reference to the accompanying drawings.

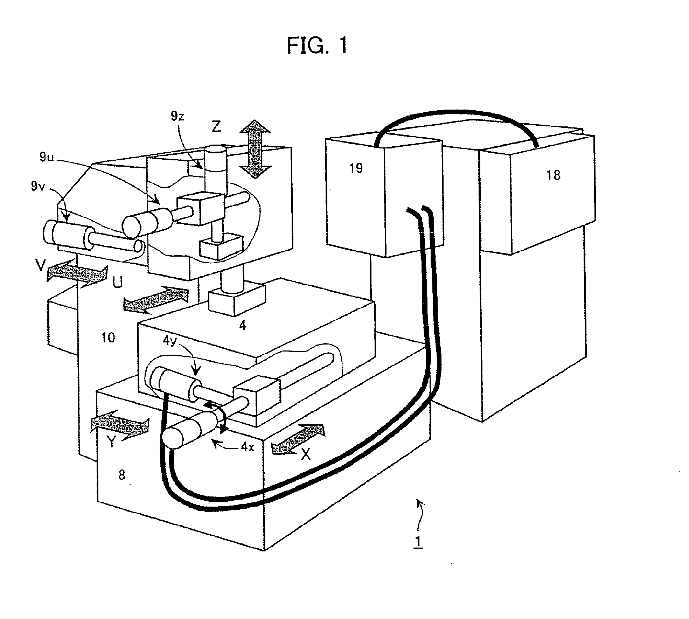

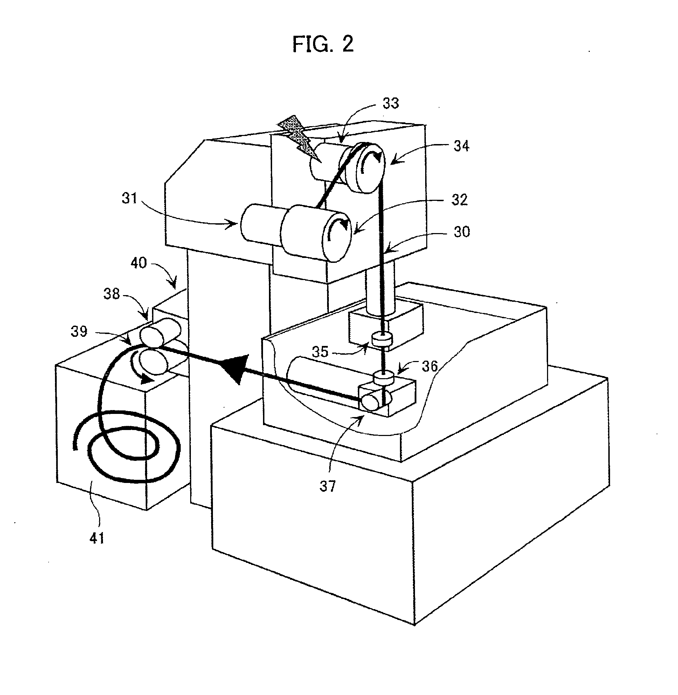

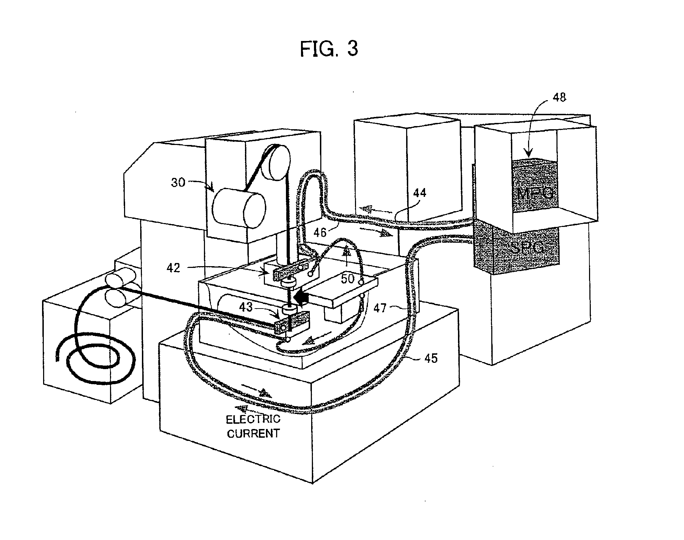

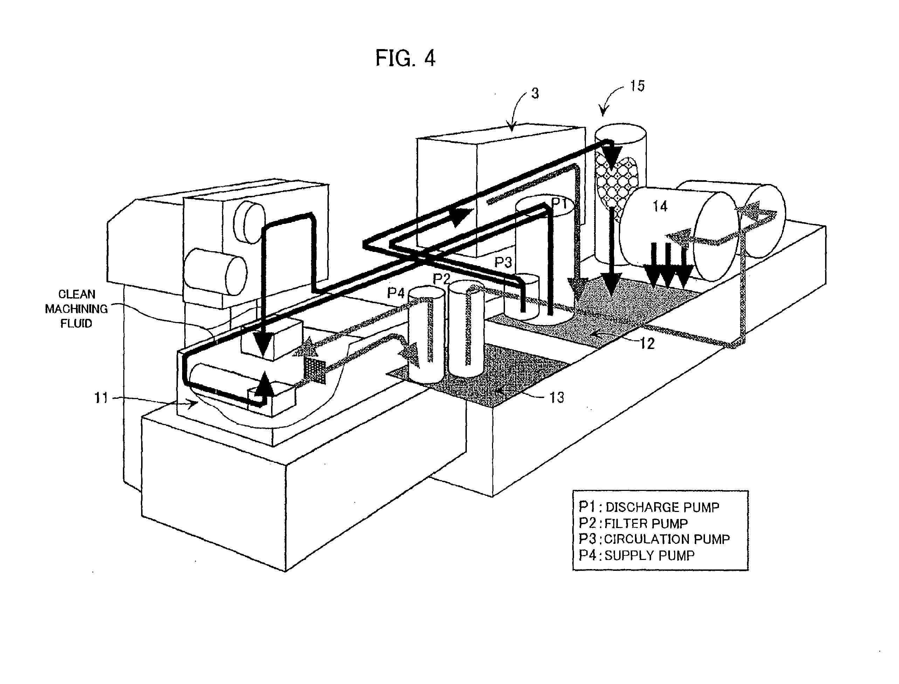

FIGS. 1-4 are diagrams illustrating schematically the structure of an electric discharge machine. FIG. 1 is a diagram illustrating the mechanical structure of the electric discharge machine, FIG. 2 is a diagram illustrating the routing system of a wire electrode, FIG. 3 is a diagram illustrating the flow of an electric discharge machining current and FIG. 4 is a diagram illustrating the flow of machining fluid.

In FIG. 1, the electric discharge machine 1 comprises a table 4 on which a workpiece is mounted and a column 10 which supports an upper guide for guiding a wire electrode. The table 4 is movable in the direction of the X- and Y-axes atop a bed 8, and is equipped with a drive mechanism 4x composed of a motor and a ball screw for moving in the X-direction and a drive mechanism 4y composed of a motor and a ball screw for moving in the Y-direction. In addition, the column 10 is comprised of a drive mechanism 9 that in turn includes two drive mechanism 9u, 9v for moving in the two horizontal directions and a drive mechanism 9z for moving in the vertical direction. The table 4 and the drive mechanism 9 are driven by drive current from a servo amp 19 controlled by control signals from a CNC 18.

In FIG. 2, the wire electrode routing system includes a supply part, a machining area and a collection part. The wire electrode is sent from the supply part to machine a workpiece in the machining area, and is collected by the collection part after machining.

The supply part is comprised of a supply motor 31 that supplies the wire electrode 30, and a brake 33 and a brake shoe 34 for imparting a predetermined tension to the supplied wire electrode 30. An upper guide 35 and a lower guide 36 are provided at a position in the machining area that holds the workpiece. The wire electrode 30 is sent to the collection part by a lower guide roller 37 after passing through the upper guide 35 and the lower guide 36.

The collection part is comprised of a feed roller 39 for reeling in the wire electrode 30 from the lower guide roller 37 and a feed motor for driving the feed roller 39. A pinch roller 38 is juxtaposed against the feed roller 39 and the wire electrode 30 is held between the two rollers so as to impart tension to the wire electrode 30 as well as to collect the machined wire electrode 30 within a wire collection box 41.

In FIG. 3, the electric discharge machining current is supplied from a power supply device 48 to electrode pins (feeder pins) 42, 43 by feed cables 44, 45, and after performing electric discharge machining between the wire electrode and the workpiece 50, is returned to the power supply device 48 by earth cables 46, 47.

The electrode pin 42 is disposed upstream of the upper guide 35 so as to contact the wire electrode 30, and the electrode pin 43 is disposed downstream of the lower guide 36 so as to contact the wire electrode 30, by means of which the electric discharge machining current is supplied to the wire electrode 30. The electric discharge machining current supplied to the wire electrode 30 generates an electric discharge in the gap with the workpiece and machines the workpiece 50. The electric discharge machining current then returns from the workpiece to the power supply device 48 through the earth cables 46, 47.

There are two supply routes for the electric discharge machining current. One route runs from the feed cable 44 to the electrode pin 42, the wire electrode 30, the workpiece 50 and the earth cable 46. The other route runs from the feed cable 45 to the electrode 43, the wire electrode 30, the workpiece 50 and the earth cable 47.

The power supply device 48 supplies the electric discharge machining current whose characteristics depend on the machining step to the wire electrode 30. The power supply device 48 is comprised of an MPG (Main Pulse Generator) and an SPG (Sub-Pulse Generator) that controls the supply of the electric discharge machining current, and supplies electric discharge machining current according to a program set in the CNC and machining conditions.

In FIG. 4, the electric discharge machine is comprised of a machining tank 11, a clean fluid tank 12 and a contaminated fluid tank 13, circulates the machining fluid circulated between these using pumps P1-P4, supplies machining fluid to the machining area, collects the machining fluid, decontaminates the collected machining fluid, and controls resistivity and temperature.

The machining fluid that collects in the clean fluid tank 12 is pumped by the machining fluid discharge pump P1 and discharged to the machining area. The machining fluid discharged to the machining area removes sludge generated by machining from the machining part and cools the machining area, the temperature of which has risen due to electric discharge machining.

After the machining fluid is discharged to the machining area it is collected in the machining tank 11. The machining fluid collecting in the machining tank 11 contains the sludge generated at the machining part and also absorbs the heat generated by electric discharge machining, and experiences a rise in temperature.

The machining fluid in the machining tank 11 spills into the contaminated fluid tank 13 and is collected. The machining fluid in the contaminated fluid tank 13 is sent to a filter 14 by a filter pump P2 and decontaminated, after which the machining fluid is returned to the clean fluid tank 12.

The machining fluid collecting in the clean fluid tank 12 is sent to a machining fluid temperature control device 3 by a circulation pump P3. The machining fluid temperature control device 3 cools the heated machining fluid to a predetermined temperature and returns it to the clean fluid tank 12. The machining fluid collecting in the clean fluid tank 12 is then sent to an ion exchanger 15 by the circulation pump P3. The ion exchanger 15 controls the resistivity of the machining fluid and adjusts it to a predetermined resistivity, after which the ion exchanger 15 returns the machining fluid to the clean fluid tank 12.

As thus described above, the temperature and the resistivity of the machining fluid in the clean fluid tank 12 are adjusted to predetermined levels. A supply pump P4 is activated when supplying a predetermined amount of fluid to the machining tank 11 when machining starts.

The electric discharge machine 1 of the present invention, with the device configuration shown in FIGS. 1-4 described above, by cooling the machining fluid discharged from the discharge pump, restrains the rise in temperature of the machining fluid caused by the discharge pump.

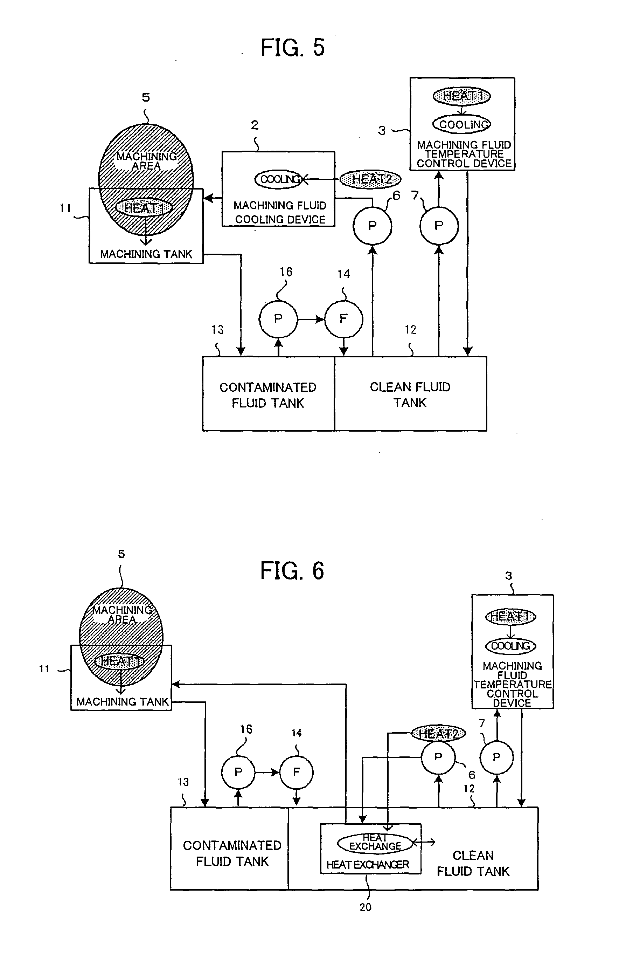

FIG. 5 is a diagram illustrating schematically the general structure of the electric discharge machine of the present invention. In FIG. 5, the machining fluid is discharged from the clean fluid tank 12 to the machining area 5 by the discharge pump 6 and collected at the machining tank 11. The collected machining fluid flows from the machining tank 11 to the contaminated fluid tank 13, is discharged by the filter pump 16 to be filtered by the filter 14, returned to the clean fluid tank 12, and sent to the machining fluid temperature control device 3 by the pump 7. The machining fluid temperature control device 3 adjusts the machining fluid, heated by the heat generated by electric discharge machining (heat 1), to a predetermined temperature.

In addition to the above-described structure, the electric discharge machine 1 of the present invention is comprised of a machining fluid cooling device 2 disposed between the machining area 5 and the discharge pump 6 that discharges machining fluid from the clean fluid tank 12 to the machining area 5. The machining fluid cooling device 2 cools the machining fluid, which has been heated by the heat from the discharge pump 6 (heat 2), to a predetermined temperature. By so doing, the machining fluid, which has been heated by the discharge pump, is adjusted to a predetermined temperature so that machining fluid of a predetermined temperature is always supplied to the machining area 5.

FIG. 6 is a diagram illustrating one example of the structure of the machining fluid cooling device. In FIG. 6, the machining fluid cooling device 2 shown in FIG. 5 is composed of a heat exchanger 20. The heat exchanger 20 exchanges heat between the machining fluid discharged by the discharge pump and the machining fluid in the clean fluid tank 12, and by this heat exchange the temperature of the machining fluid on the clean fluid tank 12 side is controlled. The machining fluid on the clean fluid tank 12 side is temperature controlled by the machining fluid temperature control device 3, and therefore the temperature of the machining fluid heated by the discharge pump 6 is cooled to a predetermined temperature by the heat exchange.

The heat exchanger 20 has no power, motor or other such heat source, and thus can maintain the machining fluid to be supplied to the machining area that passes through the heat exchanger 20 at a controlled predetermined temperature.

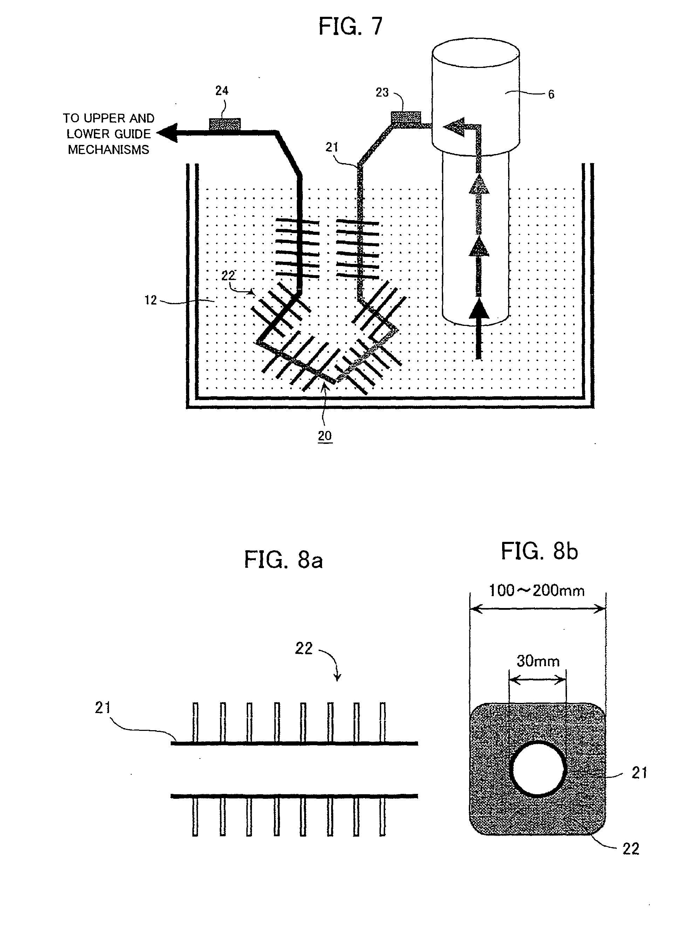

FIG. 7 and FIGS. 8a and 8b are diagrams illustrating one example of the structure of the heat exchanger. The heat exchanger 20 is comprised of a pipe 21 through which the machining fluid passes and fins 22 attached to the outside of the pipe 21. The pipe 21 and the fins 22 can be formed using a material with a good coefficient of thermal conductivity, such as stainless steel. One end of pipe 21 is connected to the discharge side of the discharge pump 6 and the other end of pipe 21 is disposed toward the machining area, for example, the upper and lower guide mechanisms. The pipe 21 and the fins 22 are both immersed in the machining fluid in the clean fluid tank 12.

The machining fluid that flows through the pipe 21 exchanges heat with the machining fluid in the clean fluid tank 12 through the fins 22, thus cooling the machining fluid heated by the discharge pump 6 to the temperature of the machining fluid in the clean fluid tank 12.

FIGS. 8a and 8b show cross-sectional views of the pipe 21 and fins 22 from different angles. The fins 22 are formed so as to radiate outward from the outer surface of the pipe 21, so as to obtain a broad surface area of contact with the machining fluid inside the clean fluid tank 12. It should be noted that, although in FIG. 8b the diameter of the pipe 21 is given as 30 mm and the shape of the fins is given as rectangles 100-200 mm long on each side, the invention is not limited to such dimensions and shapes and may be of other dimensions and shapes.

In addition, the heat exchanger 20 may be configured so as to provide temperature sensors 23, 24 inside the pipe 21 where the pipe 21 is not immersed in the machining fluid in the clean fluid tank 12. For example, the temperature of the machining fluid before it enters the clean fluid tank 12 can be detected by installing the temperature sensor 23 between the discharge pump 6 and the fins 22, and the temperature of the machining fluid after heat exchange in the clean fluid tank 12 and just before it is supplied to the machining area can be detected by installing the temperature sensor 24 between the fins 22 and the machining area.

That the heat exchanger 20 is working can be confirmed from the temperature information of the machining fluid in the pipe 21 detected by the temperature sensors 23, 24.

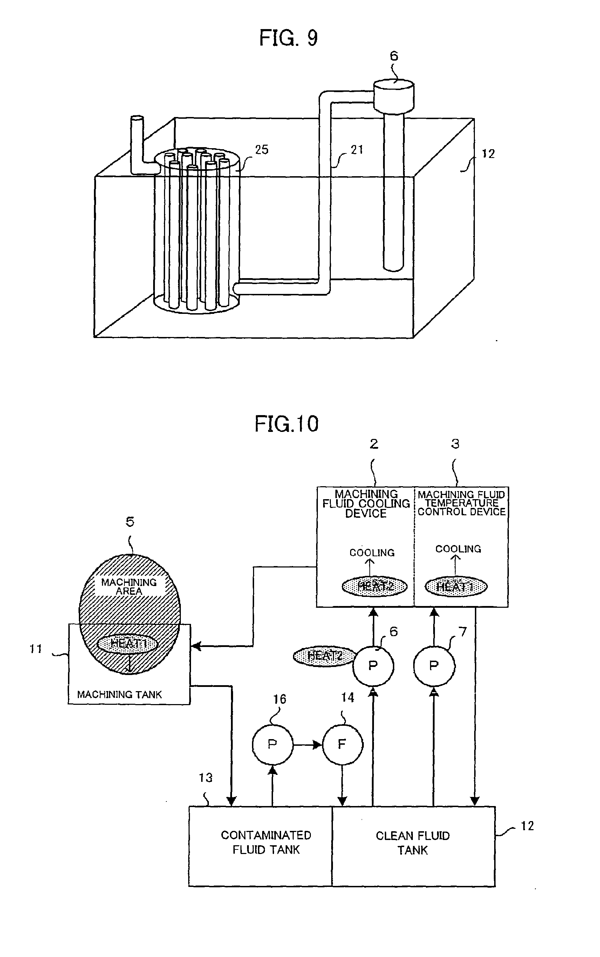

FIG. 9 is a diagram illustrating another example of the structure of a heat exchanger. A heat exchanger 25 comprises a cylinder provided with a plurality of through-holes that completely penetrate the cylinder. One side of the cylinder is connected to a pipe from the discharge pump 6 and the other side of the cylinder is connected to a pipe that leads to the machining area. The heat exchanger 25 is immersed in the machining fluid in the clean fluid tank 12, so that the through-holes are filled with machining fluid. The machining fluid discharged from the discharge pump 6 exchanges heat with the machining fluid in the clean fluid tank 12 through the outer surface of the cylinder as well as through the walls of the through-holes, thus cooling the heated machining fluid.

It should be noted that the heat exchangers shown in FIGS. 8a, 8b and 9 are illustrative examples only, and that other configurations are also possible.

FIG. 10 is a diagram illustrating another example of the structure of a machining fluid cooling device. In this example, the machining fluid cooling device 2 is combined with the machining fluid temperature control device 3. The machining fluid pumped by the discharge pump 6 is cooled by the machining fluid cooling device 2 combined with the machining fluid temperature control device 3. With such a configuration, the devices that control the machining fluid can be consolidated into a single unit.

The present invention is not limited to the above-described embodiments and variations, and various modifications may be made thereto within the spirit and scope of the present invention. Therefore, in order to apprise the public of the scope of the present invention, the following claims are made.

## Claims

1. An electric discharge machine comprising:
a clean fluid tank containing machining fluid with temperature thereof controlled;
a discharge pump for discharging machining fluid in said clean fluid tank to a machining area through piping; and
a machining fluid cooling device provided between said discharge pump and the machining area, for cooling the machining fluid discharged from said discharge pump.

2. An electric discharge machine according to claim 1, wherein said machining fluid cooling device comprises a part of the piping passing through said clean fluid tank to exchange heat between the machining fluid inside the part of the piping and the machining fluid contained in said clean fluid tank.

3. An electric discharge machine according to claim 2, wherein said part of the piping is provided with fins.

4. An electric discharge machine according to claim 1, wherein a machining fluid temperature control device is provided for controlling the temperature of the machining fluid in said clean fluid tank, and the machining fluid temperature control device functions as said machining fluid cooling device for cooling the machining fluid discharged from said discharge pump.

5. A machining fluid cooling device for an electric discharge machine in which machining fluid contained in a clean fluid tank with temperature thereof controlled is discharged by a discharge pump to be sent to a machining area, said machining fluid cooling device comprising:
piping for conducting the machining fluid discharged from the discharge pump to the machining area; and
a heat exchanger connected with said piping and arranged in the machining fluid in the clean fluid tank, for cooling the machining fluid discharged from the discharge pump by heat exchange with the machining fluid in the clean fluid tank.

6. A machining fluid cooling device according to claim 5, wherein said heat exchanger comprises a part of the piping passing through the clean fluid tank to exchange heat between the machining fluid inside the piping and the machining fluid in the clean fluid tank.

7. A machining fluid cooling device according to claim 6, wherein said portion of the piping passing through the clean fluid tank is provided with fins.
